# EUROPÄISCHE PATENTSCHRIFT

(11) **EP 0 929 753 B1**
(45) Veröffentlichungstag und Bekanntmachung des Hinweises auf die Patenterteilung: **03.04.2002**
(21) Anmeldenummer: 96934576.8
(22) Anmeldetag: 08.10.1996
(51) Int. Cl.: F16D 48/06, F16D 43/286, F16D 1/08

(54) **SICHERHEITSKUPPLUNG**
SAFETY CLUTCH
ACCOUPLEMENT DE SURETE

(43) Veröffentlichungstag der Anmeldung: 21.07.1999
(73) Patentinhaber: Voith Turbo GmbH & Co. KG, 89522 Heidenheim (DE)
(72) Erfinder: LINDENTHAL, Hans, D-89522 Heidenheim (DE)
(74) Vertreter: Dr. Weitzel & Partner
(86) Internationale Anmeldenummer: EP9604362
(87) Internationale Veröffentlichungsnummer: WO9815751

(56) Entgegenhaltungen:
- DE-A- 4 028 158
- DE-A- 4 112 484
- US-A- 3 686 919
- US-A- 4 635 769
- US-A- 4 662 492

## Beschreibung

Die Erfindung betrifft eine Sicherheitskupplung zur Übertragung von Drehmomenten zwischen zwei gleichachsigen Maschinenteilen, im einzelnen mit den Merkmalen des Oberbegriffes von Anspruch 1.

Eine derartige Sicherheitskupplung ist beispielsweise in der DE-OS 29 23 902 offenbart. Diese dient der Übertragung von Drehmomenten zwischen zwei gleichachsigen Maschinenteilender und dabei der Verhinderung unzulässiger Drehmomentensteigerungen. Die Sicherheitskupplung weist mindestens eine dünnwandige Hülse auf, die eine sich axial erstreckende Wand einer im wesentlichen ringförmigen Kammer bildet, die mit Druckmittel beaufschlagbar ist, um diese Hülse im wesentlichen elastisch in radialer Richtung zu deformieren und wenigstens mittelbar mit einer Fläche eines Elementes, an dem die Kupplung befestigt werden soll, zu verklemmen. An die ringförmige Kammer schließt sich eine Kanalanordnung an, der eine Sicherheits- bzw. Kupplungsentlastungseinrichtung zugeordnet ist, die durch Relativbewegung zwischen diesen beiden Flächen oder eine bestimmte Torsionsdeformation derselben in einen Zustand gebracht werden kann, bei dem das in der ringförmigen Kammer befindliche Druckmittel zur Entlastung der ringförmigen Kammer aus dieser durch die Kanalanordnung ausströmen kann.

Zum Übertragen eines bestimmten Drehmomentes ist eine bestimmte Flächenpressung erforderlich. Dazu wird Öl in die ringförmige Kammer gepumpt, bis der notwendige Druck erreicht ist, der zum Verspannen der einzelnen Maschinenteile gegeneinander erforderlich ist. Die Kupplung wird somit auf das gewünschte Auslösedrehmoment eingestellt. Bei Überschreitung dieses Drehmomentes im Falle einer Überlastung rutscht die Kupplung durch. Das übertragbare Drehmoment fällt ab, denn der wirksame Haftreibungskoeffizient geht in den Gleitreibungskoeffizienten über. Es findet in Umfangsrichtung eine Relativbewegung zwischen den einzelnen miteinander verklemmten Elementen der beiden Maschinenteile statt. Ein beispielsweise auf dem einen Maschinenteil befestigter Abscherring schert ein mit der Kanalanordnung bzw. der ringförmigen Kammer der Kupplung in Verbindung stehendes Abscherventil ab. Nach dem Abscheren des Abscherventiles bzw. der Abscherventile kann das unter hohem Druck stehende Öl frei expandieren, und das übertragbare Drehmoment fällt innerhalb weniger Millisekunden bis auf Null ab.

Der Nachteil beim Einsatz derartig ausgeführter und ansprechbarer Sicherheitskupplungen besteht darin, daß diese erst bei Auftreten einer Relativbewegung zwischen den gegeneinander verspannten Flächen, von welchen eine vom Kupplungsgrundkörper gebildet wird bzw. einer bestimmten Torsionsdeformation im Antriebsstrang ansprechen, was bereits zu dauerhaften und irreparablen Schäden im Antriebsstrang führen kann und sich in einer Erhöhung der Kosten für die Wiederherstellung des vorhergehenden Zustandes nach dem Auslösefall niederschlägt. Des weiteren stehen Relativbewegung bzw. Torsionsdeformation und Auslösung in einem unmittelbaren Zusammenhang, d.h. die Sicherheitskupplung ist hinsichtlich ihrer Anordnung an die Bereiche gebunden, in welchen die erhöhten Drehmomente vermieden werden sollen, was die Einsatzmöglichkeiten von vorn herein begrenzt.

Der Erfindung liegt deshalb die Aufgabe zugrunde, eine Sicherheitskupplung der eingangs genannten Art derart weiterzuentwickeln, daß die genannten Nachteile vermieden werden. Das Ziel besteht in der Schaffung einer kostengünstigen, mit wenig Aufwand realisierbaren, sicheren sowie schnell reagierenden Überlastsicherung gegenüber Drehmomentenüberlastung. Die Überlastsicherung gegenüber Drehmomentenüberlastung soll bereits bei Drehmomenten, die das maximal zulässige Drehmoment nur geringfügig überschreiten, wirksam werden können. Sinnvoll ist es weiterhin, die Größe des maximal zulässigen übertragbaren Drehmomentes einstellen bzw. direkt festlegen zu können, so daß bei dessen Überschreitung die Drehmomentenübertragung sofort unterbrochen werden kann. Die Überlastsicherung gegenüber Drehmomentenüberlastung soll sich des weiteren durch eine geringe Ansprechzeit, d.h. eine geringe Zeitspanne zwischen dem Auftreten eines unzulässig hohen Drehmomentes und der Unterbrechung der Drehmomentenübertragung auszeichnen und nicht kausal an eine Deformation im Antriebsstrang gebunden sein.

Die erfindungsgemäße Lösung der Aufgabe ist durch die Merkmale des Anspruches 1 charakterisiert. Vorteilhafte Ausgestaltungen sind in den Unteransprüchen wiedergegeben.

Erfindungsgemäß wird eine Sicherheitskupplung bei Erfassung einer Störgröße fremdausgelöst, d.h. unabhängig vom Auftreten einer Drehmonmentspitze im Antriebsstrang und einer bereits vorandenen Torsionsdeformation.

Die Sicherheitskupplung zur Übertragung von Drehmomenten zwischen zwei gleichachsigen Maschinenteilen - einem ersten Maschinenteil und einem zweiten Maschinenteil -in einem Antriebsstrang weist wenigstens einen Kupplungsgrundkörper zur wenigstens mittelbaren reibschlüssigen Verbindung der beiden Maschinenteile auf, umfassend wenigstens eine dünnwandige Hülse, die eine Wand einer ringförmigen Kammer bildet, welche mit Druckmittel beaufschlagbar ist.
Es ist wenigstens eine Zufuhrleitung vorgesehen, die sich durch den Kupplungsgrundkörper bis zur ringförmigen Kammer erstreckt und luft- und flüssigkeitsdicht mittels Verschlußelementen verschließbar ist sowie ein Entlastungsmechanismus. Der Entlastungsmechanismus umfaßt wenigstens ein, ein Sprengmittel tragendes oder beinhaltendes Bauelement, welches im Überlastfall zur Sprengung gebracht und wenigstens mittelbar ein Freigeben der Zufuhrleitungen ermöglicht. Bei den Sprengmitteln handelt es sich um feste, flüssigeoder auch pastenartige Substanzen oder Substanzgemische, die nach Zündung durch Funken, Flammen, Reibung Schlag e.tc. rasch große Mengen komprimierbarer Gase freisetzen, welche zerstörerisch auf ihre wenigstens unmittelbare Umgebung wirken. Für Auslösung der Kupplung und der Entlastung und damit die Unterbringung des Sprengmittels sind wenigstens zwei Möglichkeiten denkbar:
1) die Auslösung erfolgt direkt, d.h. das Sprengmittel wird unmittelbar in den Verschlußventilen integriert und dort zur Sprengung gebracht;
2) die Auslösung durch das das Sprengmittel tragende Bauelement erfolgt indirekt, d.h. der Entlastungsmechanismus umfaßt eine Abschereinrichtung wobei das Sprengmittel in Verbindungselementen o.ä. eingesetzt wird und durch Verschiebung der Abschereinrichtung gegenüber bzw. an den Verschlußventilen wirksam wird.

Im letzgenannten Fall finden konventionelle Abschermechanismen Anwendung - beispielsweise in Form eines Abscherringes - welche in ihrer Lage gegenüber dem Kupplungsgrundkörper im Normalbetrieb fixiert sind und im Auslösefall in radialer oder in axialer Richtung relativ zu diesen verschoben werden können. Das Vorsehen zusätzlicher Mittel zur Beschleunigung der Relativbewegung ist denkbar. Die das Sprengmittel tragenden Bauteile können als Sprengbolzen oder beispielsweise als Trennschrauben ausgeführt sein. Die Sprengbolzen sind dabei vorzugsweise parallel zur Symmetrieachse der Antriebswelle angeordnet und auf dieser Parallelen gegenüber den Verschlußventilen in axialer Richtung verschiebbar. Vorzugsweise sind wenigstens drei Sprengbolzen in gleichem Abstand um den Umfang der Antriebswelle angeordnet. Die Abschereinrichtung selbst kann beispielsweise drehfest mit der Antriebswelle verbunden sein, jedoch in axialer Richtung verschiebbar auf dieser gelagert. Eine Möglichkeit für eine derartige Anordnung ist eine Keilwellenverbindung zwischen Antriebswelle und Abschereinrichtung. Die Abschereinrichtung kann des weiteren auch frei drehbar auf der An- oder Abtriebswelle gelagert sein. Eine drehfeste Verbindung ist nicht unbedingt erforderlich, bietet sich jedoch im Fall der Verwendung einer Abschereinrichtung in Form eines Abscherringes an, da der Ring mit entsprechenden Aussparungen zur Aufnahme der Verschlußelemente, welche meist in Form von Ventilen gestaltet sind, ausgeführt werden kann.

Die das Sprengmittel tragenden Bauteile sind mit einer Zündeinrichtung gekoppelt, welche entsprechend einem Signal der Kopplung aktiviert wird. Die Kopplung ist vorzugsweise in Form einer Steuereinrichtung ausgeführt, welche wenigstens einen Istwerteingang und einen Ausgang aufweist. Der Eingang bzw. die Eingänge sind jeweils mit einer Drehmomentenmeßeinrichtung, welche den Abtriebssträngen zugeordnet sind, gekoppelt. Das Istwertsignal für das aktuelle ermittelte Drehmoment wird mit einem entweder fest vorgegebenen oder einstellbaren zulässigen Wert für das Drehmoment im Steuergerät verglichen. Entsprechend der Abweichung, d.h. bei Überschreitung wird am Ausgang des Steuergerätes ein Signal zum Auslösen des Entlastungsmechanismus, in diesem Fall zur Zündung der Sprengbolzen, ausgegeben. Da die Übertragung und der Vergleich bei elektronischer Messung mit Lichtgeschwindigkeit erfolgt, und analog dazu auch die Auslösung des Entlastungsmechanismus mit dieser Geschwindigkeit möglich ist, eignet sich eine derartig gestaltete Sicherheitskupplung besonders zum raschen Auslösen bei Drehmomentenüberlastung. Der Entlastungsmechanismus kann sofort bei Ermittlung einer auftretenden Drehmomentenspitze oder bereits vorher ausgelöst werden, was bei mechanischen Meßeinrichtungen immer zu einer gewissen geringen Verzögerung führen kann.

Eine weitere Möglichkeit besteht darin, die Abschereinrichtung mittels vorgespannter Trennschrauben, beispielsweise mit Federn, welche ebenfalls gezündet werden, im Normalbetrieb in ihrer Lage zu fixieren und bei Auslösung, d.h. beim Auftreten des Überlastungsfalles in Richtung der Verschlußelemente zu beschleunigen. Die Abschereinrichtung kann derart ausgeführt sein, daß diese in radialer Richtung oder aber axial an den Verschlußelementen angreift. Durch die Vorspannung kann der Auslösevorgang zusätzlich noch beschleunigt werden.

Für den Fall, daß das das Sprengmittel tragende Bauteil das Verschlußventil ist, umfaßt dieses einen Grundkörper und einen, einen Anschlag für den Grundkörper in radialer Richtung bildenden Haltering. Der Grundkörper umfaßt einen Dichtkörper, welcher in Einbaulage die Zufuhrleitung versperrt, und einen das Sprengmittel tragenden Aufsatz. Der Haltering weist wenigstens ein Bohrung auf, welche sich in Einbaulage von dem durch Haltering und Grundkörper begrenzten Raum durch den Haltering bis zu dessen Außenumfang erstreckt. Der Haltering ist formschlüssig mit dem Kupplungsgrundkörper verbindbar, in der Regel trägt der Haltering ein Gewinde und wird mit dem Kupplungsgrundkörper verschraubt. Dem Grundkörper ist wenigstens eine Zündelektrode und ein Verteilerring zur Erzeugung eines Zündfunkens zugeordnet. Die Zündelektrode ist mit dem Grundkörper verbunden und läuft mit dieser im Normalbetrieb um. Der Verteilerring kann fest am Maschinengestell gelagert sein.

Der Entlastungsmechanismus bzw. das das Sprengmittel tragende Bauteil ist jeweils mit einer Einrichtung zur Erfassung des ein Auslösen der Sicherheitskupplung hervorrufenden Drehmomentes an den Abtriebssträngen und/oder einer dem Drehmoment proportionalen Größe, welche jedem Abtriebsstrang zugeordnet ist, koppelbar. Die Kopplung umfaßt Mittel, welche bei Überschreitung des Drehmomentes oder einer dem Drehmoment proportionalen Größe den Entlastungsmechanismus aktiviert. Die Aktivierung des Entlastungsmechanismus erfolgt durch Auslösen des Sprengsatzes.

Die Sicherheitskupplung ist eine fremdausgelöste Kupplung, welche entsprechend einer erfaßten Störgröße, beispielsweise einem ermittelten Wert für das aktuelle übertragene Drehmoment und/oder einem dem Drehmoment proportionalen Kennwert auslösbar ist.
Für die Auslösung können im wesentliche vier Möglichkeiten in Betracht gezogen werden:
1) Meßung bzw. Ermittlung des Drehmomentes an jedem Abtriebsstrang, insbesondere jedem Gelenkwellenstrang und/oder
2) Meßung bzw. Ermittlung einer dem Drehmoment an den einzelnen Abtriebssträngen proportionalen Größe (beispielsweise in einem Walzwerk die Walzkraft, Geschwindigkeitsdifferenzen) und/oder
3) Meßung bzw. Ermittlung von Parametern des zu be- oder verarbeitenden Materials beispielsweise beim Einsatz in Walzwerken als indirekte, dem drehmoment proportionale Größe (Temperatur, Dicke) und/oder
4) Meßung bzw. Ermittlung einer die Drehmomentenübertragung bzw. den Arbeitsvorgang der anzutreibenden Maschine nicht direkt, jedoch indirekt und zeitlich versetzt wirksam werdenden und beeinflussenden Größe, beispielsweise die Ermittlung von Schwingungen im Fundament oder der Umgebung (beispielsweise im Falle eines Erdbebens) oder das Auftreten einer Rauchentwicklung. Für diese Fälle ist die Verwendung der erfindungsgemäßen Sicherheitskupplung in Kernkraftwerken interessant. Die ermittelten Werte können mit einem nicht zu überschreitenden Sollwert verglichen werden und beispielsweise in einer Steuerung ein Signal zur Ansteuerung der Entlastungseinrichtung erzeugen. Eine mechanische Übermittlung ist ebenfalls denkbar.

Die zu ermittelnde bzw. zu erfassende Störgröße kann somit die bloße Abweichung, insbesondere Überschreitung vom Drehmoment oder einer dem Drehmoment proportionalen Größe von einem vorgebbaren Sollwert sein, wobei sowohl der zahlenmäßige Wert der Abweichung als auch die Tatsache, daß die zulässigen Werte überschritten sind, als Auslösesignale für den Entlastungsmechanismus Verwendung finden können.
Es besteht auch die Möglichkeit, daß überhaupt die Erfassung einer Größe, beispielsweise das Auftreten von Rauch, zur Auslösung des Entlastungsmechanismus führen kann. Was als Störgröße wirkt und wie deren Erfassung erfolgt, kann für den konkreten Einzellfall entsprechend den dort vorhandenen Randbedingungen festgelegt werden.

Die erfindungsgemäße Fremdauslösung einer, in einem Antriebsstrang vorgesehenen Sicherheitskupplung bietet den Vorteil, daß eine frühzeitige Auslösung ohne vorherige Schäden im Antriebsstrang möglich ist, d.h. daß damit ein Frühwarnsystem geschaffen werden kann. Des weiteren ist eine Auslösung bei unterschiedlichsten Drehmomenten möglich, so daß in Antriebssystemen mit mehreren Abtriebssträngen eine einzelne Sicherheitskupplung genügt, um bei Drehmomentsptitzen an einem einzelnen Abtriebsstrang bereits die Drehmomentenübertragung im Antriebsstrang zu unterbrechen, was sich in einer Senkung der Kosten niederschlägt.

Die erfindungsgemäße Ausführung Sicherheitskupplung und des entsprechenden, zur Sicherheitskupplung gehörigen Entlastungsmechanismus ermöglichen eine schnell ansprechbaren Überlastsicherungseinrichtung und eine kostengünstige Drehmomentenüberlastsicherungeinrichtung in einem Antriebsstrang, bei dem die von einer Antriebsquelle aufgebrachte Leistung auf mehrere Abnehmer auf der Abtriebsseite verteilt wird, da hierbei nicht jedem Abtrieb eine separate Überlastsicherungseinrichtung zugeordnet werden muß.

Zur Drehmomentenmessung bzw. zur Ermittlung einer dem Drehmoment proportionalen Größe, welche dieses unmittelbar oder mittelbar beeinflußt, an den Gelenkwellensträngen bzw. auch an den Walzen können verschiedene Meß- bzw. Erfassungssysteme genutzt werden. Die Drehmomentenmessung und/oder die Erfassung einer dem Drehmoment proportionalen Größe kann mechanisch, elektrisch oder auch optisch erfolgen. Die für den jeweiligen Einsatzfall günstigste Variante ist im einzelnen für den konkreten Einsatzfall zu prüfen. Mechanische Meß- und Erfassungssysteme beruhen auf dem Prinzip der Dehnmeßstreifen oder des mechanischen Drehmomentenaufnehmers. Aber auch Kombinationen aus den einzelnen Meßsystemen sind denkbar.

Die Kopplung der Einrichtung zur Drehmomentenmessung mit dem Entlastungssystem erfolgt vorzugsweise elektronisch. Eine mechanische Kopplung ist denkbar, setzt jedoch eine hohe Bearbeitungsgenauigkeit voraus, da der Abstand zwischen Drehmomentenmeßstelle und Abschereinrichtung in der Regel sehr groß ist. Beispielsweise wird die Kopplung zwischen Drehmomentenmeßeinrichtung und Entlastungseinrichtung mittels einer Steuerung realisiert, deren Eingangsgröße ein Signal "Drehmoment überschritten" und deren Ausgangsgröße ein Signal zum Auslösen des Sprengmittels sind.

Die Sprengbolzen sind mit einer Zündeinrichtung gekoppelt, welche entsprechend einem Signal der Überwachungseinrichtung aktiviert wird. Die Überwachungseinrichtung ist vorzugsweise in Form einer Steuereinrichtung ausgeführt, welche wenigstens zwei Istwerteingänge aufweist und einen Ausgang. Die beiden Eingänge sind jeweils mit einer Drehmomentenmeßeinrichtung, welche den Abtriebssträngen zugeordnet sind, gekoppelt. Das Istwertsignal für das aktuelle ermittelte Drehmoment wird mit einem entweder fest vorgegebenen oder einstellbaren zulässigen Wert für das Drehmoment im Steuergerät verglichen. Entsprechend der Abweichung, d.h. bei Überschreitung wird am Ausgang des Steuergerätes ein Signal zum Auslösen des Entlastungsmechanismus, in diesem Fall zur Zündung der Sprengbolzen, ausgegeben. Da die Übertragung und der Vergleich bei elektronischer Messung mit Lichtgeschwindigkeit erfolgt, und analog dazu auch die Auslösung des Entlastungsmechanismus mit dieser Geschwindigkeit möglich ist, eignet sich eine derartig gestaltete Sicherheitskupplung besonders zum raschen Auslösen bei Drehmomentenüberlastung. Der Entlastungsmechanismus kann sofort bei Ermittlung einer auftretenden Drehmomentenspitze oder bereits vorher ausgelöst werden, was bei mechanischen Meßeinrichtungen immer zu einer gewissen geringen Verzögerung führen kann.

Eine weitere Möglichkeit besteht darin, die Abschereinrichtung mittels vorgespannter Trennschrauben, beispielsweise mit Federn, welche ebenfalls gezündet werden, im Normalbetrieb in ihrer Lage zu fixieren und bei Auslösung, d.h. beim Auftreten des Überlastungsfalles in Richtung der Verschlußelemente zu beschleunigen. Die Abschereinrichtung kann derart ausgeführt sein, daß diese in radialer Richtung oder aber axial an den Verschlußelementen angreift. Durch die Vorspannung kann der Auslösevorgang zusätzlich noch beschleunigt werden.

Die erfindungsgemäße Lösung wird nachfolgend anhand von Figuren erläutert. Es zeigen:
- Fig. 1a und 1b: verdeutlichen eine Ausführung einer erfindungsgemäßen Sicherheitskupplung mit einem, zum Entlastungsmechanismus gehöhrenden Abscherring, welcher mittels Sprengung gegenüber den Verschlußelementen eine Relativbewegung erfährt und ein Blockschaltbild einer dem Entlastungsmechanismus zuordenbaren Steuerung;
- Fig. 2a und 2b: verdeutlichen eine Ausführung einer erfindungsgemäßen Sicherheitskupplung mit in den Verschlußelementen integrierten Sprengmitteln vor und nach dem Auslösevorgang.

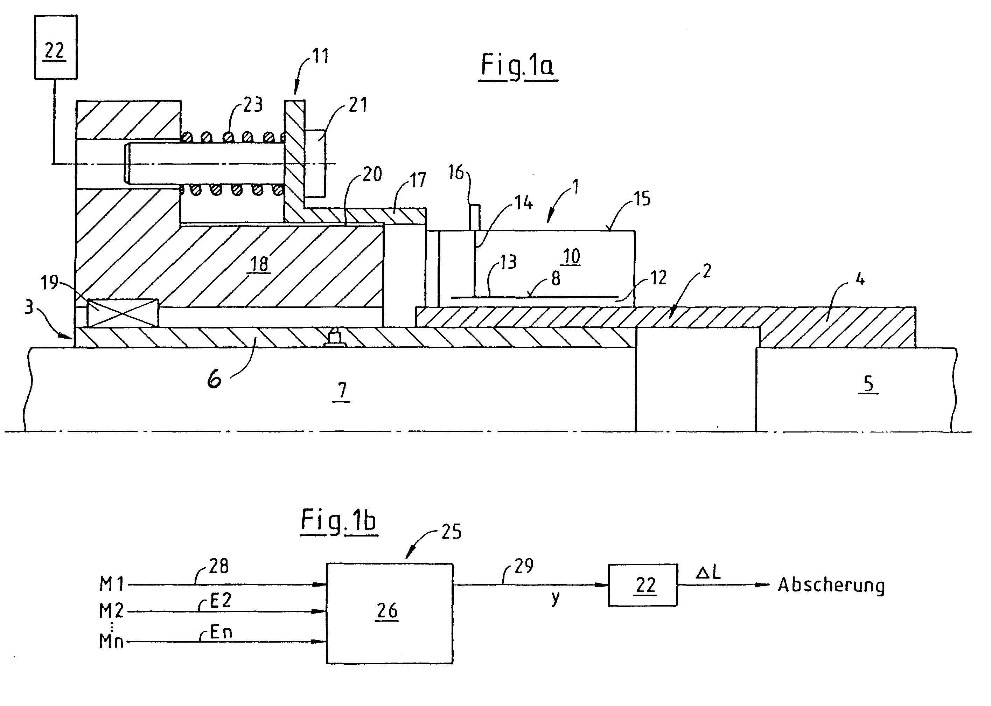

Die Figur 1 verdeutlicht einen Ausschnitt aus einem Antriebsstrang mit einer erfindungsgemäßen Ausführung einer Sicherheitskupplung. Das Drehmoment im Antriebsstrang wird von einer nicht dargestellten Antriebsquelle über Wellenstränge auf wenigstens einen Abtrieb übertragen. Im Antriebsstrang ist eine Sicherheitskupplung 1 vorgesehen, welche der reibschlüssigen Verbindung zwischen einem ersten Maschinenteil 2, welches wenigstens mittelbar mit der Antriebsquelle gekoppelt ist und als zur Antriebsseite gehörig angesehen werden kann, und einem zweiten Maschinenteil 3, auf welches das Drehmoment übertragen wird, dient. Das erste Maschinenteil 2 ist als Buchse 4 ausgeführt, welches mit einer Antriebswelle 5, die beispielsweise direkt mit der Antriebsquelle gekoppelt sein kann, drehfest verbunden ist. Das zweite Maschinenteil 3 gehört zum Abtrieb und ist ebenfalls als Buchse 6 ausgeführt, welche drehfest mit einer Abtriebswelle 7 verbunden ist. Die Realisierung der kraftschlüssigen Verbindung zwischen dem ersten Maschinenteil 2 und dem zweiten Maschinenteil 3 mittels der Sicherheitskupplung 1 kann diese bei entsprechender Gestaltung der Maschinenteile auch zwischen beiden in radialer Richtung angeordnet sein. Im letztgenannten Fall wäre eine hülsenartige Verlängerung des ersten oder zweiten Maschinenteiles in axialer Richtung erforderlich.

Die Sicherheitskupplung 1 umfaßt einen Kupplungsgrundkörper 10 und einen Entlastungsmechanismus 11. Der Kupplungsgrundkörper 10 umfaßt wenigstens eine dünnwandige Hülse 12, die eine sich axial erstreckende Wand 8 einer im wesentlichen ringförmigen Kammer 13 bildet. Die ringförmige Kammer 13 ist mit einem Druckmittel beaufschlagbar, um die Hülse in radialer Richtung zu deformieren. Dem ringförmigen Raum bzw. der Kammer 13 sind Zufuhrleitungen 14, wenigstens jedoch eine Zufuhrleitung, die sich im wesentlichen vom Außenumfang 15 des Kupplungsgrundkörpers 10 radial in Richtung der ringförmigen Kammer 13 erstrecken, zugeordnet. Die Zufuhrleitungen 14 sind durch Abscherventile 16 luft- und flüssigkeitsdicht verschließbar. Die Abscherventile 16 ragen geringfügig über den Außenumfang 15 des Kupplungsgrundkörpers 10 hinaus. Der Kupplungsgrundkörper 10 umschließt in radialer Richtung die Buchse 4. Auf der Buchse 6 stützt sich ein Abscherring 17 des Entlastungsmechanismus 11 über eine weitere Buchse 18 und ein Lager 19 ab.

Der Abscherring 17 ist drehfest mit der Buchse 18 verbunden, beispielsweise, wie hier dargestellt, in Form einer Keilwellenverbindung 20. Er ist in axialer Richtung parallel zur Symmetrieachse der Abtriebswelle 7 gegenüber der Buchse 18 verschiebbar. Der Abscherring 17 wird im Normalbetrieb mittels der Trennschrauben 21 in seiner Lage gegenüber den Verschlußventilen 16 der Sicherheitskupplung fixiert. Dazu wird der Abscherring mittels der Trennschrauben 21 zusätzlich zur drehfesten Verbindung durch die Keilwellenverbindung 20 in axialer Richtung gegenüber der Buchse 18 fixiert. Die Buchse 18 kann entweder fest mit einem Gestellteil verbunden sein, d.h. Buchse 18 und damit der Abscherring 17 stehen im Normalbetrieb still oder der Abscherring rotiert mit der gleichen Drehzahl wie die Sicherheitskupplung oder einer zu dieser unterschiedlichen. Im zuerst und im letztgenannten Fall weist der Abscherring keine Aussparungen zum Umschließen der Verschlußventile 17 auf, während im Fall der Drehzahlgleichheit zwischen Kupplungsgrundkörper 10 und Abscherring 17 Aussparrungen am Außenumfang des Abscherringes durchaus denkbar sind.

Die Trennschrauben 21 sind mit festen, flüssigen oder auch pastenartigen Substanzen oder Substanzgemischen gefüllt, die nach Zündung durch Funken, Flammen, Reibung, Schlag e.tc. rasch große Mengen komprimierbarer Gase freisetzen könnenund zerstörerisch auf ihre Umgebung dahingehend wirken, daß die Verbindung mittels Trennschrauben 21 gelöst wird. Im Überlastfall werden die Trennschrauben gezündet, beispielsweise mittels Zündfunken oder Telemetrie. Damit wird der Abscherring im dargestellten Fall in axialer Richtung beschleunigt und schert die Köpfe der Verschlußventile 16 am Kupplungsgrundkörper 10 ab.

Die Trennschrauben 21 sind zu diesem Zweck mit einer, das Sprengmittel aktivierenden Einrichtung 22 gekoppelt, welche wiederum mit dem Ausgang einer in Figur 1b dargestellten Steuereinrichtung, verbindbar ist, an welchem ein Stellsignal zur Auslösung des Zündvorganges entsprechend den ermittelten Drehmomentensignalen ausgegeben wird.
Die Sprengung bewirkt eine Trennung zwischen der Buchse 18 und dem Abscherring 17 in axialer Richtung. Aufgrund der Sprengkraft und der eine Relativbewegung in axialer Richtung zwischen Buchse 18 und Abscherring 17 ermöglichende Keilwellenverbindung 20 wird der Abscherring in axialer Richtung gegen die Verschlußventile 16 bewegt. Zur Beschleunigung der Bewegung in axialer Richtung und damit zur Verkürzung der Zeitdauer zwischen Auslösevorgang, d.h. Sprengung, und Abscheren empfielt es sich, den Abscherring beispeislweise mittels Federn 23 in seiner Lage gegenüber der Buchse 18 vorzuspannen. Im Auslösefall, d.h. bei Trennung der Schraubverbindung 21 wirkt zusätzlich die Federkraft der Feder 23 in Richtung der Verschlußventile 16. Der Abscherring 17 erfährt bei der Verschiebung in axialer Richtung entsprechend der Vorspannkraft der Feder 23 im Auslösefall eine Beschleunigung.

Die Aktivierung des Entlastungsmechanismus 11 erfolgt über eine, in Einbaulage der Sicherheitskupplung zu realisierende Kopplung 25 mit wenigstens einer Meßeinrichtung M zur Erfassung des Drehmomentes an den Abtriebssträngen und/oder einer dem Drehmoment proportionalen Größe, wobei letztere Größen bei ver- oder barbeitenden Maschinen auch Kennwerte des zu ver- oder bearbeitenden Werkstoffes oder Gutes sein können. Denkbar ist beispielsweise bei Walzwerken die Erfassung der Kennwerte Temperatur oder der Abmessungen des zuzuführenden Walzgutes, da diese bei Überschreitung der für den Normalbetrieb zulässigen Größe zu einer Blockierung und damit zu einer überproportionalen Steigerung des Drehmomentes führen können. Im Prinzip kann jede, das Drehmoment am Abtrieb beeinflussende Größe als Vergleichsgröße verwendet werden, wobei die Beeinflussung direkt oder indirekt erfolgen kann. Denlbar ist auch die Verararbeitung von Störgrößen, welche den Arbeitsablauf nachhaltig beeinflussen können, beispielsweise das Ausbrechen eines Feuers oder eines Erdbebens.

Die Kopplung 25 kann beispielsweise als Steuereinrichtung, wie in der Figur 1b anhand eines Blockschaltbildes verdeutlicht, ausgeführt sein. Diese umfaßt ein Steuergerät 26, welches wenigstens einen Eingang 28 und einen Ausgang 29 aufweist. Der Eingang 28 ist mit einer Meßeinrichtung M1 zur Ermittlung es Drehmomentes am Abtriebsstrang. Die Meßeinrichtung kann verschiedenartig aufgebaut sein. Zur Messung des Drehmomentes können vorzugsweise Drehmomentenmeßsysteme, die nach dem Funktionsprinzip eines mechanischen Drehmomentenaufnehmers arbeiten, eingesetzt werden. Diese können beispielsweise wie in den Prospekten der Firma Ringspan ausgeführt sein. Sie arbeiten nach dem Grundprinzip, daß eine kleine Torsionsverformung in einer Axialbewegung durch einen Verstärkungshebel umgewandelt wird. Diese axiale Bewegung wird berührungsfrei durch einen Induktivdifferenzgeber in drehmomentproportionale Ströme umgewandelt. Diese drehmomentproportionalen Ströme können dann wieder beispielsweise als Eingangssignal einer Steuer- oder Regeleinrichtung fungieren, die diese Signale für ein Ausgangssignal zur Aktivierung der Abschereinrichtung verarbeitet. Bei mehreren Abtriebssträngen ist vorzugsweise jedem Abtriebsstrang eine Meßeinrichtung zugeordnet ( M2...Mn), welche mit den Eingängen E2 bis En des Steuergerätes 26 gekoppelt sind. Im Steuergerät 26 werden die gemessenen Istwerte mit vorgebbaren und abspeicherbaren zulässigen Grenzwerten verglichen und bei Überschreitung am Ausgang 29 des Steuergerätes 26 ein Stellsignal y für die den Sprengsatz aktivierende Einrichtung 22 ausgegeben. Dies hat bei einer Ausführung entsprechend Figur 1a eine Relativbewegung des Abscherringes 17 in axailer Richtung um einen Betrag delta 1 zur Folge.

Die Steuereinrichtung 25 kann jedoch auch andere Eingangsgrößen verarbeiten, welche lediglich eine Proportionalität zu dem am Abtrieb zu erwartenden Drehmoment aufweisen. Auch diese Größen können mittels geeigneter Hilfsmittel, beispielsweise mit Sensoren ermittelt werden.

Für die Gestaltung und Aktivierung des Abschermechanismus sind eine Vielzahl von Ausführungen denkbar. Dieser ist nicht an die Form eines Abscherringes gebunden. Auch kann die Abscherung auch in radialer Richtung erfolgen. Entscheidend ist, daß zwischen Abschermechanismus und Kupplungsgrundkörper eine Relativbewegung erzeugt wird, welche einen Angriff an den Verschlußventilen durch den Abschermechanismus ermöglichen. Allen ist jedoch gemeinsam, daß durch Zündung eine sofort bei Ermittlung der Drehmomentenspitze oder einer Störgröße wirksam werdende Kraft am Ventil erzeugt wird, die ein Lösen des Ventils und damit eine Unterbrechung der Drehmomentenübertragung mittels der hydraulisch verspannbaren Buchsen und Hülsen ermöglicht. Diese weiteren Varianten liegen im Ermessen des Fachmannes, weshalb auf weitere konstruktive Ausführungsmöglichkeiten hier nicht näher eingangen werden soll.

Bei dem, den Sprengsatz enthaltenden Bauteil kann es sich neben Trennschrauben auch um Bolzen oder Ventile handeln. Die Anzahl der vorzusehenden einen Sprengsatz enthaltenden Bauteile, welche in der Regel als Verbindungsteile fungieren, sowie der Verschlußelemente am Außenumfang des Kupplungsgrundkörpers richtet sich nach den erfordernissen des Einsatzfalles und der gewünschten schnelligkeit der Auslösung. Diese kann durch Erhöhung der Anuahl an Zufuhrleitungen und damit an Verschlußelemente gesteigert werden.

Die Trennschrauben bzw. Sprengbolzen sind beispielsweise aus dem Firmenprospekten der Fa. Dynamit Nobel bekannt.

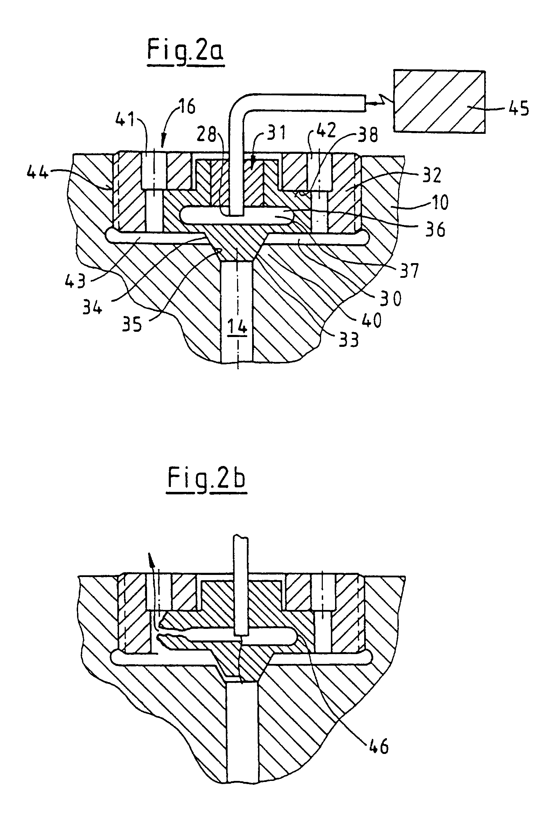

Die Figuren 2a und 2b verdeutlichen eine Möglichkeit der Anordnung von Sprengsatz tragenden Bauteilen zum Zweck der unmittelbaren Auslösung der Sicherheitskupplung vor der Auslösung und nach der Auslösung. Das den Sprengsatz tragende Bauteil ist hier das Verschlußelement. Die Schnelligkeit des Auslösens der Sicherheitskupplung wird u.a. durch die Anzahl der einen Sprengsatz tragenden Elemente, d.h. der Verschlußelemente bestimmt.
Der Grundaufbau der Sicherheitskupplung entspricht im wesentlichen dem in Figur 1 beschriebenen, weshalb für gleiche Elemente die gleichen Bezugszeichen verwendet wurden.

Die Figur 2a verdeutlicht einen Ausschnitt aus dem Kupplungsgrundkörper 10 der Sicherheitskupplung, insbesondere einen Teil der Zufuhrleitung 14 und das Verschlußventil 16. Die Zufuhrleitung 14 ist im Bereich des Außenumfanges 15 des Kupplungsgrundkörpers 10 erweitert ausgeführt, wobei dem erweitert ausgeführten Bereich vorzugsweise ein sich in Richtung des Außenumfanges 15 stetig erweiternder Übergangsbereich 40 vorgeordnet ist. Der erweiterte Bereich, hier mit 30 bezeichnet, dient der Aufnahme des Verschlußventiles 16. Das Verschlußventil 16 umfaßt einen Grundkörper 31 und einen Haltering 32. Der Grundkörper 31 umfaßt einen Dichtkörper 33, welcher in der Figur 2a als Dichtkegel ausgeführt ist und mit seiner Kegelfläche 34 an der entsprechend komplementär ausgeführten Übergangsfläche 35 im Übergangsbereich 40 anliegt. Dem Dichtkegel 33 ist das Spengmittel 36 nachgeordnet. Hier ist dem Dichtkegel unmittelbar in radialer Richtung ein Gasgenerator 37 nachgeordnet, welcher mit einem Zünder 28 gekoppelt ist. Der Gasgenerator 37 ist dabei in den Grundkörper 31 eingebettet. Der Grundkörper 31 wird in Einbaulage in radialer Richtung durch den einen Anschlag bildenden Haltering 32 fixiert. Der Haltering 32 ist als Buchse ausgeführt, deren Innenwand eine Ausnehmung aufweist, welche die Anschlagsfläche 38 für den Grundkörper 31 bildet. des weiteren weist der Haltering wenigstens eine Durchgangsbohrung, hier 41 und 42 auf, welche den im Normalbetrieb verbleibenden Freiraum 43, der von Halterring 32 und Grundkörper 31 im erweitert ausgeführten Endbereich der Zufuhrleitung gebildet wird, mit der Atmosphäre verbinden.

Der Haltering 32 weist an seinem Außenumfang 44 ein Gewinde auf, welches der Realsierung einer Schraubverbindung mit dem erweitert ausgeführten Endbereich der Zufuhrleitung 14 im Kupplungsgrundkörper 10 dient.

Der Zünder bzw. die Zündelektrode 38 ist im dargestellten Fall mit dem Grundkörper 31 fest verbunden, d.h. diese rotiert mit dem Kupplungsgrundkörper 10. Zum Zündvorgang ist ein Verteilerring 45 vorgesehen, welcher beispielsweise fest am Gestell oder an einem Gehäuse eines anderen Maschinenteiles gelagert sein kann und aufgrund eines hohen Spannungsunterschiedes zwischen Verteilring und Zündelektrode einen Zündfunken erzeugt. Dazu ist der Verteilerring 45 wenigstens mittelbar mit dem Ausgang eines Steuergerätes 26 entsprechend Figur 1b gekoppelt. Das von diesem ausgegebene Steuersignal bewirkt das Anlegen einer bestimmten Spannung am Verteilerring 45.

Eine andere Möglichkeit besteht in der Energieübertragung mittels Telemetrie.

Die Figur 2b verdeutlicht eine Ausführung entsprechend Figur 2a nach dem Auslöse, d.h. nach dem Zündvorgang. Daraus wird ersichtlich, daß nach Wirkung des Sprengmittels die Wandbereiche 46 des Grundkörpers im Bereich des Gasgenerators 37 zerstört sind und damit aufgrund des geringen Gegendruckes der Dichtkörper 33 aus seinem Sitz in radialer Richtung verschoben wird und damit den Übergangsbereich 40 freigibt. Das Druckmittel strömt aus der Druckkammer über die Zufuhrleitung 14, dem Übergangsbereich 40 der Zufuhrleitung in den Raum 43 und über die Bohrungen 41 und 42 im Haltering 32 nach außen. Die Druckkammer ist somit entlastet und der Reibschluß zwischen den Flächen der gegeneinander zu verspannenden Maschinenteile wird aufgehoben.

Die in den Fig. 2a und 2b dargestellte konstruktive Ausführung ist eine Möglichkeit zur Gestaltung der Integration des das Sprengmittel tragenden Bauteiles in den Verschlußelementen. Andere Ausführungen sind denkbar.

Wesentlich für eine schnelle Auslösung der Sicherheitskupplung ist auch die Anzahl der lösbaren Verschlußventile, der Sprengmittel tragenden unter diesen (es besteht kein Erfordernis jedes Verschlußventil mit Sprengmittel zu versehen) sowie der mögliche freigegebene Querschnitt für das ausströmende Druckmittel. Die Auslegung kann konkret auf den Einzelfall bezogen erfolgen. Die Auslösezeit verringert sich jedoch mit Zunahme der gelösten Verschlußventile.

## Patentansprüche

1. Sicherheitskupplung zur Übertragung von Drehmomenten zwischen zwei gleichachsigen Maschinenteilen - einem ersten Maschinenteil (2) und einem zweiten Maschinenteil (3) - in einem Antriebsstrang mit folgenden Merkmalen:
1.1 mit einem Kupplungsgrundkörper (10) zur wenigstens mittelbaren reibschlüssigen Verbindung zweier Maschinenteile (2, 3), umfassend wenigstens eine dünnwandige Hülse 9(12), die eine Wand (8) einer ringförmigen Kammer (13) bildet, welche mit Druckmittel beaufschlagbar ist;
1.2 mit wenigstens einer Zufuhrleitung (14), die sich durch den Kupplungsgrundkörper (10) bis zur ringförmigen Kammer (13) erstreckt und luft- und flüssigkeitsdicht mittels Verschlußelementen (16), insbesondere Verschlußventilen verschließbar ist;
1.3 mit einem Entlastungsmechanismus (11), welcher im Überlastfall wenigstens mittelbar an den Verschlußelementen (16) zerstörerisch wirksam werden kann und eine Entlastung der ringförmigen Kammer bewirkt;
**gekennzeichnet durch** folgende Merkmale:
1.4 der Entlastungsmechanismus (11) ist über eine Kopplung (25) jeweils mit einer Einrichtung (M) zur Erfassung einer Störgröße verbunden;
1.5 die Kopplung (25) umfaßt Mittel (26), welche bei Auftreten der Störgröße den Entlastungsmechanismus aktivieren.

2. Sicherheitskupplung nach Anspruch 1, **gekennzeichnet durch** folgende Merkmale:
2.1 der Entlastungsmechanismus (11) umfaßt wenigstens ein, ein Sprengmittel tragendes Bauteil (16, 31, 21), wobei das Sprengmittel bei Auftreten der Störgröße aktivierbar ist;
2.2 das das Sprengmittel tragende Bauteil (16, 31, 21) wirkt bei und/oder nach Aktivierung des Sprengmittels wenigstens mittelbar auf wenigstens ein Verschlußelement (16) ein.

3. Sicherheitskupplung nach Anspruch 2, **gekennzeichnet durch** folgende Merkmale:
3.1 der Entlastungsmechanismus (11) umfaßt eine Abschereinrichtung (17);
3.2 die Abschereinrichtung ist mittels wenigstens einem, das Sprengmittel tragenden Bauteil (21) in seiner Lage in radialer oder axialer Richtung gegenüber wenigstens einem Verschlußelement (16) fixiert und im Störfall um eine bestimmte Strecke gegenüber dem Verschlußventil verschiebbar.

4. Sicherheitskupplung nach Anspruch 3, **gekennzeichnet durch** folgende Merkmale:
4.1 die Abschereinrichtung (17) ist mit der Abtriebswelle (7) wenigstens mittelbar drehfest verbindbar;
4.2 Abschereinrichtung (17) ist parallel gegenüber der Abtriebswelle (7) verschiebbar gelagert ist.

5. Sicherheitskupplung nach Anspruch 3, **gekennzeichnet durch** folgende Merkmale:
5.1 die Abschereinrichtung (17) ist am Maschinengestell oder Gehäuse gegenüber der Abtriebswelle im Normalbetrieb nicht drehbar gelagert;
5.2 die Abschereinrichtung (17) ist parallel zur Abtriebswelle (7) verschiebbar gelagert.

6. Sicherheitskupplung nach einem der Ansprüche 3 bis 5, **dadurch gekennzeichnet, daß** die Abschereinrichtung als Abscherring (17) ausgeführt ist.

7. Sicherheitskupplung nach einem der Ansprüche 3 bis 6, **gekennzeichnet durch** das folgende Merkmal:
7.1 es sind Mittel zur Vorspannung der Abschereinrichtung (17) für dessen Lage im Normalbetrieb vorgesehen.

8. Sicherheitskupplung nach Anspruch 7, **dadurch gekennzeichnet, daß** das Mittel als Feder (23) ausgeführt ist.

9. Sicherheitskupplung nach Anspruch 1 bis 8, **dadurch gekennzeichnet, daß** das das Sprengmittel tragende Bauteil das Verschlußelement (16) ist.

10. Sicherheitskupplung nach Anspruch 9, **gekennzeichnet durch** folgende Merkmale:
10.1 das Verschlußelement umfaßt einen Grundkörper (31) und einen, einen Anschlag für den Grundkörper in Einbaulage radialer Richtung bildenden Haltering (32);
10.2 der Grundkörper (31) umfaßt einen Dichtkörper (33), welcher in Einbaulage die Zufuhrleitung (14) versperrt, und einen das Sprengmittel tragenden Aufsatz;
10.3 der Haltering (32) weist wenigstens ein Bohrung (41, 42) auf, welche sich in Einbaulage von dem **durch** Haltering (32) und Grundkörper (31) begrenzten Raum (43) **durch** den Haltering bis zu dessen Außenumfang erstreckt;
10.4 der Haltering (32) ist formschlüssig mit dem Kupplungsgrundkörper (10) verbindbar;
10.5 dem Grundkörper (31) ist wenigstens eine Zündelektrode (38) und ein Verteilerring (45) zur Erzeugung eines Zündfunkens zugeordnet.

11. Sicherheitskupplung nach Anspruch 10, **dadurch gekennzeichnet, daß** die Zündelektrode (38) mit dem Grundkörper (31) gekoppelt ist und der Verteilerring (45) fest am Maschinengestell gelagert ist.

12. Sicherheitskupplung nach einem der Ansprüche 1 bis 11, **gekennzeichnet durch** folgende Merkmale
12.1 die Kopplung umfaßt eine Steuereinrichtung (25);
12.2 die Steuereinrichtung (25) umfaßt ein Steuergerät (26), welches wenigstens einen Eingang (28, E2..En) aufweist, der mit einer Einrichtung zur Messung (M, M1..Mn) oder Erfassung der Störgröße koppelbar ist;
12.3 die Steuereinrichtung weist wenigstens einen Ausgang (29) zur Ausgabe eines Stellsignales für den Entlastungsmechanismus (11) auf.

13. Sicherheitskupplung nach Anspruch 12, **dadurch gekennzeichnet, daß** das Steuergerät (26) eine Vergleichseinrichtung umfaßt, mittels welcher der Istwert einer Störgröße mit einem vorgebbaren Sollwert vergleichbar ist.

14. Sicherheitskupplung nach einem der Ansprüche 1 bis 11, **gekennzeichnet durch** folgende Merkmale:
14.1 die Kopplung umfaßt einen Wandler;
14.2 der Wandler ist mit den Meß- bzw. Erfassungseinrichtungen gekoppelt;
14.3 der Wandler setzt die von den Meß- bzw. Erfassungseinrichtungen erhaltenen Signale in ein Stellsignal zur Auslösung des Entlastungsmechanismus um.

15. Sicherheitskupplung nach einem der Ansprüche 1 bis 14, **dadurch gekennzeichnet, daß** die zu erfassende Störgröße die Abweichung einer dem Drehmoment und/oder dem Drehmoment des einzelnen Abtriebstranges proportionale Größe von einem vorgebbaren Sollwert ist.

16. Sicherheitskupplung nach Anspruch 15, **dadurch gekennzeichnet, daß** die dem Drehmoment proportionalen Größen Betriebsparameter eines mittels der anzustreibenden Maschine zu be- oder verarbeitenden Gutes sind.

17. Sicherheitskupplung nach Anspruch 15, **gekennzeichnet durch** folgende Merkmale:
17.1 der Abtrieb des Antriebsstranges wird von wenigstens zwei Walzen eines Walzwerkes gebildet;
17.2 die dem Drehmoment proportionalen Größe wird von der Dicke und/oder der Temperatur des Walzgutes gebildet.

18. Sicherheitskupplung nach Anspruch 16, **dadurch gekennzeichnet, daß** die dem Drehmoment proportionalen Größen Betriebsparameter des Abtriebsstranges sind.

19. Sicherheitskupplung nach einem der Ansprüche 1 bis 18, **dadurch gekennzeichnet, daß** die Störgröße ein, im Fundament der anzutreibenden Maschine und/oder der mittelbaren Umgebung ermittelter Schwingungswert ist.

20. Sicherheitskupplung nach einem der Ansprüche 1 bis 18, **dadurch gekennzeichnet, daß** als Störgröße das Auftreten einer Rauchentwicklung ist.

## Claims

1. Safety clutch for transmitting torques between two coaxial machine parts - a first machine part (2) and a second machine part (3) - in a drive train with the following features:
1.1 with a clutch basic member (10) for at least indirect frictional connection of two machine parts (2, 3), comprising at least one thin-walled sleeve (12) which forms a wall (8) of an annular chamber (13) which can be loaded with pressure medium;
1.2 with at least one feed line (14) which extends through the clutch basic member (10) to the annular chamber (13) and can be closed in an airtight and liquid-impermeable manner by means of closing elements (16), in particular closing valves;
1.3 with a stress-relief mechanism (11) which, in the event of an overload, can act in a destructive manner at least indirectly on the closing elements (16) and brings about stress relief in the annular chamber;
**characterised by** the following features:
1.4 the stress-relief mechanism (11) is connected via a coupling (25) to a respective device (M) for detecting a disturbance variable;
1.5 the coupling (25) comprises means (26) which activate the stress-relief mechanism in the event of the disturbance variable.

2. Safety clutch according to claim 1, **characterised by** the following features:
2.1 the stress-relief mechanism (11) comprises at least one component (16, 31, 21) which carries an explosive, the explosive being activated in the event of the disturbance variable;
2.2 the component (16, 31, 21) which carries the explosive acts upon and/or after activation of the explosive at least indirectly on at least one closing element (16).

3. Safety clutch according to claim 2, **characterised by** the following features:
3.1 the stress-relief mechanism (11) comprises a shearing device (17);
3.2 the shearing device is fixed in its position in the radial or axial direction with respect to at least one closing element (16) by means of at least one component (21) which carries the explosive and can be displaced, in the event of a disturbance, by a certain distance with respect to the closing valve.

4. Safety clutch according to claim 3, **characterised by** the following features:
4.1 the shearing device (17) can be at least indirectly non-rotatably connected to the output shaft (7);
4.2 the shearing device (17) is displaceably mounted parallel to the output shaft (7).

5. Safety clutch according to claim 3, **characterised by** the following features:
5.1 during normal operation the shearing device (17) is non-rotatably mounted with respect to the output shaft on the machine frame or housing;
5.2 the shearing device (17) is displaceably mounted parallel to the output shaft (7).

6. Safety clutch according to any of claims 3 to 5, **characterised in that** the shearing device is designed as a shearing ring (17).

7. Safety clutch according to any of claims 3 to 6, **characterised by** the following feature:
7.1 means for biasing the shearing device (17) are provided for the position thereof during normal operation.

8. Safety clutch according to claim 7, **characterised in that** the means is designed as a spring (23).

9. Safety clutch according to claim 1 to 8, **characterised in that** the component which carries the explosive is the closing element (16).

10. Safety clutch according to claim 9, **characterised by** the following features:
10.1 the closing element comprises a basic member (31) and a retaining ring (32) which forms a stop for the basic member in the assembled position in the radial direction;
10.2 the basic member (31) comprises a sealing member (33), which in the assembled position blocks the feed line (14), and an attachment which carries the explosive;
10.3 the retaining ring (32) has at least one hole (41, 42) which in the assembled position extends from the space (43) delimited by the retaining ring (32) and basic member (31) through the retaining ring up to the external periphery thereof;
10.4 the retaining ring (32) can be connected with interlocking fit to the clutch basic member (10);
10.5 at least one ignition electrode (38) and one distributor ring (45) is associated with the basic member (31) to produce an ignition spark.

11. Safety clutch according to claim 10, **characterised in that** the ignition electrode (38) is coupled to the basic member (31) and the distributor ring (45) is securely mounted on the machine frame.

12. Safety clutch according to any of claims 1 to 11, **characterised by** the following features:
12.1 the clutch comprises a control unit (25);
12.2 the control unit (25) comprises a control apparatus (26) which has at least one input (28, E2...En) which can be coupled to a device for measuring (M, M1...Mn) or detecting the disturbance variable;
12.3 the control unit has at least one output (29) for emitting an adjusting signal for the stress-relief mechanism (11).

13. Safety clutch according to claim 12, **characterised in that** the control apparatus (26) comprises a comparator by means of which the actual value of a disturbance variable can be compared with a predetermined desired value.

14. Safety clutch according to any of claims 1 to 11, **characterised by** the following features:
14.1 the clutch comprises a transducer;
14.2 the transducer is coupled to the measuring or detecting devices;
14.3 the transducer converts the signals received by the measuring or detection devices into an adjusting signal to trigger the stress-relief mechanism.

15. Safety clutch according to any of claims 1 to 14, **characterised in that** the disturbance variable to be detected is the deviation of a variable proportional to the torque and/or the torque of the individual drive train from a predetermined desired value.

16. Safety clutch according to claim 15, **characterised in that** the variables proportional to the torque are operating parameters of an article to be machined or processed by means of the machine to be driven.

17. Safety clutch according to claim 15, **characterised by** the following features:
17.1 the output of the drive train is formed by at least two rollers of a rolling mill;
17.2 the variable proportional to the torque is formed by the thickness and/or the temperature of the article to be rolled.

18. Safety clutch according to claim 16, **characterised in that** the variables proportional to the torque are operating parameters of the drive train.

19. Safety clutch according to any of claims 1 to 18, **characterised in that** the disturbance variable is a vibration value determined in the base of the machine to be driven and/or the mediate vicinity.

20. Safety clutch according to any of claims 1 to 18, **characterised in that** the occurrence of smoke is a disturbance variable.

## Revendications

1. Accouplement de sûreté pour transmettre des couples entre deux parties de machine coaxiales, une première partie de machine (2) et une seconde partie de machine (3), sur une ligne d'entrée, comportant :
- un corps de base d'accouplement (10) pour assurer au moins indirectement la liaison verrouillée à force entre les deux parties de machine (2, 3), comprenant au moins une douille (12) à paroi mince, qui constitue une paroi (8) d'une chambre annulaire (13) pouvant être soumise à l'action d'un moyen de pression,
- au moins une conduite d'amenée (14), qui traverse le corps de base (10) pour atteindre la chambre annulaire (13) et qui peut être rendue étanche à l'air et aux liquides par des éléments de fermeture (16), en particulier des soupapes de fermeture,
- un mécanisme de décharge (11), qui en cas de surcharge peut exercer, au moins indirectement, une action destructrice sur les éléments de fermeture (16) et provoquer une décharge de la chambre annulaire,
**caractérisé en ce que**
- le mécanisme de décharge (11) est, par un accouplement (25), relié chaque fois à un dispositif (M) servant à détecter une grandeur perturbatrice, et
- l'accouplement (25) comprend des moyens (26) qui activent le mécanisme de décharge quand apparaît une grandeur perturbatrice.

2. Accouplement de sûreté selon la revendication 1,
**caractérisé en ce que** :
- le mécanisme de décharge (11) comprend au moins un composant (16, 31, 21) portant un moyen explosif qui peut être mis en action quand apparaît la grandeur perturbatrice, et
- le composant (16, 31, 21) agit au moment et/ou après la mise en action du moyen explosif, au moins indirectement sur au moins un élément de fermeture (16).

3. Accouplement de sûreté selon la revendication 2,
**caractérisé en ce que**
- le mécanisme de décharge (11) comprend un dispositif de cisaillement (17), qui a sa position fixée en direction axiale et en direction radiale, par rapport à au moins un élément de fermeture et, qui en cas de perturbation, peut coulisser d'une certaine longueur par rapport à la soupape de fermeture.

4. Accouplement de sûreté selon la revendication 3,
**caractérisé en ce que**
- le dispositif de cisaillement (17) peut être, au moins indirectement, rendu solidaire en rotation de l'arbre de sortie (7), et
- le dispositif de cisaillement (17) est monté de manière à pouvoir coulisser parallèlement à l'arbre de sortie (7).

5. Accouplement de sûreté selon la revendication 3,
**caractérisé en ce que**
le dispositif de cisaillement (17) est monté sur le bâti de la machine ou sur le boîtier de manière à ne pas pouvoir tourner, en fonctionnement normal, par rapport à l'arbre de sortie (7), mais est monté de manière à pouvoir coulisser parallèlement à l'arbre de sortie (7).

6. Accouplement de sûreté selon l'une quelconque des revendications 3 à 5,
**caractérisé en ce que**
le dispositif de cisaillement est constitué par une bague de cisaillement (17).

7. Accouplement de sûreté selon l'une quelconque des revendications 3 à 6,
**caractérisé par**
des moyens de précontrainte du dispositif de cisaillement dans la position qu'il occupe en fonctionnement normal.

8. Accouplement de sûreté selon la revendication 7,
**caractérisé en ce que**
les moyens sont des ressorts (23).

9. Accouplement de sûreté selon l'une quelconque des revendications 1 à 8,
**caractérisé en ce que**
le composant portant le moyen explosif est l'élément de fermeture (16).

10. Accouplement de sûreté selon la revendication 9,
**caractérisé en ce que**
- l'élément de fermeture comprend un corps principal (31) et une bague de maintien (32) formant butée en direction radiale pour le corps principal en position de montage,
- le corps principal (31) comprend un corps d'étanchéité (33) qui en position de montage obture la conduite d'amenée (14), et un appendice portant le moyen explosif,
- la bague de maintien (32) présente au moins un alésage (41, 42) qui, en position de montage, part de l'espace (43) délimité par la bague de maintien (32) et le corps principal (31) et traverse la bague de maintien jusqu'à la périphérie externe de celle-ci,
- la bague de maintien (32) peut être reliée, par combinaison de formes, au corps de base (10) de l'accouplement, et
- au corps principal (31) est associé au moins une électrode d'allumage (38) et une bague de distribution (45) pour produire une étincelle d'allumage.

11. Accouplement de sûreté selon la revendication 10,
**caractérisé en ce que**
l'électrode d'allumage (38) est accouplée au corps principal (31) et la bague de distribution (45) est montée fixe sur le bâti de la machine.

12. Accouplement selon l'une quelconque des revendications 1 à 11,
**caractérisé en ce que**
l'accouplement comprend un dispositif de commande (25), qui comprend un appareil de commande (26), présentant au moins une entrée (28, E2, En) qui peut être accouplée à un dispositif servant à mesurer (M, M1... Mn) ou à saisir la grandeur perturbatrice, et
- le dispositif de commande présente au moins une sortie (29) pour délivrer un signal de commande au mécanisme de décharge (11).

13. Accouplement de sûreté selon la revendication 12,
**caractérisé en ce que**
l'appareil de commande (26) comprend un dispositif de comparaison, par l'intermédiaire duquel la valeur réelle peut être comparée à une valeur de consigne prédéfinie.

14. Accouplement de sûreté selon l'une des revendications 1 à 11,
**caractérisé en ce que**
l'accouplement comprend un convertisseur accouplé à des dispositifs de mesure ou de détection, et qui transforme les signaux reçus des dispositifs de mesure et de détection en un signal pour déclencher le mécanisme de décharge.

15. Accouplement de sûreté selon l'une quelconque des revendications 1 à 14,
**caractérisé en ce que**
la grandeur perturbatrice à détecter est l'écart, par rapport à une valeur de consigne prédéfinie que présente une grandeur proportionnelle au couple et/ou au couple de la ligne de sortie.

16. Accouplement de sûreté selon la revendication 15,
**caractérisé en ce que**
les grandeurs proportionnelles au couple sont des paramètres de fonctionnement d'un produit à usiner ou transformer au moyen de la machine à entraîner.

17. Accouplement de sûreté selon la revendication 15,
**caractérisé en ce que**
la sortie de la ligne d'entraînement est composée d'au moins deux rouleaux d'un laminoir, et la grandeur proportionnelle au couple est l'épaisseur et/ou la température du produit laminé.

18. Accouplement de sûreté selon la revendication 16,
**caractérisé en ce que**
les grandeurs proportionnelles au couple sont des paramètres de fonctionnement de la ligne de sortie.

19. Accouplement de sûreté selon l'une quelconque des revendications 1 à 18,
**caractérisé en ce que**
la grandeur perturbatrice est la grandeur de vibrations produites dans la fondation de la machine à entraîner et/ou dans l'environnement indirect.

20. Accouplement de sûreté selon l'une quelconque des revendications 1 à 8,
**caractérisé en ce que**
la grandeur perturbatrice est la survenance d'une fumée.
